Europäisches Patentamt

European Patent Office

Office européen des brevets

(19)

(11) Veröffentlichungsnummer: **0 282 620**
**A1**

## EUROPÄISCHE PATENTANMELDUNG

(21) Anmeldenummer: 87104053.1

(22) Anmeldetag: 19.03.87

(51) Int. Cl.⁴ **F03B 17/00**

Die Bezeichnung der Erfindung wurde geändert
(Richtlinien für die Prüfung im EPA, A-III, 7.3).

(43) Veröffentlichungstag der Anmeldung:
**21.09.88 Patentblatt 88/38**

(84) Benannte Vertragsstaaten:
**AT BE CH DE ES FR GB GR IT LI LU NL SE**

(71) Anmelder: **Hill, Willi Hilmar**
**Glockenstrasse 17**
**D-5500 Trier(DE)**

(72) Erfinder: **Hill, Willi Hilmar**
**Glockenstrasse 17**
**D-5500 Trier(DE)**

(54) **Antriebmechanismus.**

(57) Bei diesem Mechanismus, wie in den Vortexten und Beschrieben erläutert, alleine arbeitend, oder in Zusammenarbeit mit den Pumpsystemen, die in den Unteransprüchen I.II, und III vorgatragen sind, handelt es sich um eine Mechanik, mit deren Hilfe, wie in a), b) und c) dargelegt, atmosphärische, hydrostatische und künstlich geschaffene Druckverhältnisse in eine verwertbare Arbeitsleistung transformiert werden.

EP 0 282 620 A1

# 0 282 620

ZEICHNUNG NR. 2

SCHNITT G-H        SCHNITT I-J        SCHNITT O-P

⬭ = FLÜSSIGKEIT

SCHNITT K-L        SCHNITT M-N        SCHNITT Q-R

ZEICHNUNG NR. 3

ATMOSPH DRUCK

UNTERDRUCK

⬭ = FLÜSSIGKEIT

1a.

## Antriebsmechanismus

Die Erfindung bezieht sich auf einem Mecanismus, der statische Druckkräfte in eine motorische (Dreh)-Bewegung umzusetzen in der Lage ist.Vorzugsweise handelt es sich bei den vorerwähnten Druckkräfte um Kräfte, wie sie bei Wassersäulen ( hydrostatische Kräfte ) und oder bei atmosphärischen Drücken (Luftdruck) vorliegen.Die Erfindung zeigt einen -Weg auf,diese Kräfte in verwertbare Arbeitskraft umzusetzen.

Man ist versucht diesem Antriebsmechanismus-Turbinencharakter-zuzubilligen.Dies fällt jedoch desshalb schwer,da eine Turbine grundsätzlich einen außerordentlich schnell laufenden Mechanismus darstellt, mit hundert oder gar tausenden -von Umdrehungen je Minute.

Der hier behandelte Mechanismus zeichnet sich gerade durch ein gegenteiliges Verhalten aus,aufgrund seiner Charakteristik ist er ein ausgesprochen langsam arbeitender Mechanismus,der im Bereich von einer Umdrehung je Minute arbeitet. Neben dieser materialschonenden Eigenschaft ist er dennoch in der Lage der Arbeitsausbeute zu dienen.

Es gibt vielfältige Mechanismen ,mit denen sich Arbeit und -Leistung erringen läßt, die das statische Druckgefälle einer Flüssigkeitssäule ( Wassersäule) umwandeln.Die Wasserräder alter Wassermühlen arbeiten nach diesem Prinzip ebenso, wie moderne Wasserkraftwerke ,die das angestaute Wasser über Turbinen in verwertbare Arbeitsleistung umwandeln.Es ist das -Umwandeln in eine andere Energieform.

Diesen beiden, als Beispiel angegebenen Mechanismen ist jedoch zu eigen, daß sie große Wassermengen benötigen und ihre Effizienz direkt abhängig ist von Höhe der angestauten Wassersäule und der Flüssigkeitsmenge ( Durchflußvolumen). Von einem Mechanismus,der auch den überall herschenden atmosphärischen Druck vergleichbar, wie vor beschrieben, zu verwerten in der Lage ist, ist wenig bekannt.Bei letzterer Betrachtung werden diesem Mechanismus jedoch Grenzen gesetzt,die sich durch den relativ geringen Druck von ca.1 kp/qcm (Luftdruck) begründen lassen.

Um diese vergleichbare geringere Effizienz jedoch in lohnender Weise zu steigern kann der hier dargelegte Mechanismus auch mit einer "eigenen Atmosphäre" versehen werden,indem er in ein Druckbehältnis ( Windkessel ) installiert wird, in dem sich beliebig hohe Drück herstellen lassen,die sich auf die Arbeitsausbeute direkt und linear steigernd auswirken.

Von einem Mechanismus dieser Art is ebenso wenig bekannt, da bei vergleichbaren Mechanismen der in dem Druckgefäß -einmal eingebrachte Druck sich schnell abbaut.Dies ist hier jedoch nicht der Fall.

Hier will die Erfindung in mehrfacher Hinsicht Abhilfe schaffen.Die Erfindung, wie sie in den Ansprüchen gekennzeichnet ist, unterteilt sich zum besseren Verständnis und zur besseren Darlegung in mehrere Ansprüche.

1.) - in den Hauptanspruch mit vier Ausführungsvarianten ( Funktionsvarianten)

2.) - in die Unteransprüche Nr. I + II + III

Der Hauptanspruch steht in direkter Beziehung zu den Unteransprüchen, insbesonders die Unteransprüche I und III ermöglichen es erst den Hauptanspruch vorzutragen, bezw. Teile des Hauptanspruches zu rechtfertigen.

Der Hauptanspruch mit den vier Ausführungsvarianten wird desshalb in einen Anspruch zusammengefaßt,um eine kompaktere Darlegung zu erreichen und teilweise immer wiederkehrende Wiederholungen zu vermeiden.

Die Erfindung unterscheidet sich insofern von dem bekannten Stand der Technik,als sie einen Mechanismus betrifft, der

a) - Arbeitsausbeute aus der atmosphärischen Drucksäule, in Verbindung mit Flüssigkeit (Wasser) ermöglicht.

b) - Arbeitsausbeute aus einer statischen Flüssigkeitssäule ( Wassersäule) ermöglicht,ohne das derart große Flüssigkeitsmengen erforderlich sind,wie dies bei gleicher Arbeitsleistung,bei bekannten Mechanismen der Fall sein kann .

c) - Arbeitsausbeute aus einem künstlich geschaffenem Drucksystem ermöglicht,ohne das sich der künstlich geschaffene Druckunterschied abbaut.

Die durch die Erfindung erreichten Vorteile sind vielfältig.

zu a) - atmosphäricher Luftdruck ist überall vorhanden, je nach Höhenlage unterschiedlich, in Verbindung mit einer Flüssigkeit, die keinen statischen Druck aufzuweisen braucht, läßt sich praktisch überall, wenn auch eine vergleichsweise geringe Arbeitsausbeute ermöglichen.

Es sei erlaubt, an den Versuch des Herrn Otto von Guericke , im ausgehenden Mittelalter -hinzuweisen, der acht Pferde benötigte, um eine ca. 12oo.-qcm große leergepumpte Hohlkugel auseinanderzuziehen.Gedanklich lehnt sich die Erfindung an diesen Versuch an.

zu b ) Es gibt viele Bereiche auf der Erde,in denen die Natur Wasser in verschiedenen Höhenlagen zur Verfügung stellt,jedoch nicht genügend Flüssigkeit um mit einem entsprechenden Durchflußvolumen Mechanismen bekannter Bauart rentierlich einzusetzen.Hier findet der in der Erfindung dargelegte Mechanismus Einsatz,ohne das großartige Stauwerke oder ähnliches errichtet werden muß.

Mit vergleichsweisen geringen Wassermengen in Verbindung mit dem statischem Druckgefälle ist der hier beschriebene Mechanismus arbeitsfähig.

zu c ) Der Vorteil dieser Erfindungsausführung ist darin zu sehen,daß sie ebenso überall da -Anwendung findet, wo eine geregelte oder -vorhandene Energieversorgung nicht oder -noch nicht gegeben ist.Ebenso ist eine dezentrale Energieversorgung am jeweiligen Verbrauchsort möglich.

Der Erfindung,die sich in den nachfolgenden Erläuterungen im wesentlichen auf das Prinzip ( System ) bezieht,liegen nachfolgend aufgezählte Bedingungen und Erkenntnisse zugrunde :

----die praktisch vorhandene Unkompressibilität der meißten Flüssigkeiten ( Wasser )

----die vorhandene Fähigkeit,geschlossene Behältnisse mit einem dauerhaften Unter-oder Überdruck auszustatten.

---das Vorhandensein von verfügbaren Flüssigkeiten ( Wasser ) in,für die Funktion dieses Mechanismusses erforderlichen Mengen.Der Flüssigkeit -kommt dabei unter anderem eine volumenausfüllende ( hohlraumausfüllende) Eigenschaft zugute, die wesentlicher Bestandteil der Funktionsweise des Gesamtmechanismusses ist.

Im folgenden wird die Erfindung anhand zwei der Ausführungsweg dargestellenden Zeichnungen ( Zeichnung Nr.1 und 2 ) erläutert und die Ausführungsvarianten a) durch die Zeichnung Nr.3 und 4, die Ausführungsvariante b) durch die Zeichnung Nr. 5 und die Ausführungsvariante c) durch die -Zeichnung Nr. 6 erläutert.

Die Grundelemente des mechanismusses unterscheiden sich in :

- ein Kolbensystem und

- ein Zylindersystem

Zunächst wird das Kolbensystem erläutert.

Einzelne, innen hohle, Formkörper (1) aus Leichtmetall, oder sonstigem geeignetem Material,sind derart bemessen, daß die seitlichen Flänchen einem gemeinsamen Mittelpunkt ( M ) zulaufen und die kürzeren vorderen und hinteren -senkrechten Flächen je Teil eines Kreisbogens ($r_1$ = inneren Kreisbogen , $r_2$ = äußerer Kreisbogen) darstellen. Diese " Einzelkolben" sind ansonsten rundum geschlossen, ihr spez. Gewicht ist leichter als das von Wasser, damit sie darin aufschwimmen können.Diese Einzelkolben,deren obere Ecken ( 2 ) abgerundet werden, sind allseitig glatt und eben ausgeführt, damit sie in der Ausgangsstellung absolut eng aneinandergepreßt anliegen können, also einen geschlossenen Kreisring bilden - und , wie später noch darzulegen ist , durch sie umschließende Abdichtungsflächen sauber und leicht durchgleiten können. Die Einzelkolben ( 1 ) sind mit einem Untersatz ( 3 )mittels Gelenkstangen ( 4 ) verbunden.Diese Verbindung ( 4 ) besteht aus zwei beweglichen, den Einzelkolben ( 1 ) mit dem Untersatz ( 3 ) verbindenden , kräftigen Gelenkstangen die versetzt angeordnet sind und damit Sorge tragen, daß sich der Einzelkolben immer in aufrechter Stellung befindet.

Im nachfolgendem und zur Vereinfachung wird auf die Darstellung zweier Gelenkstangen zugunsten einer Gelenkstange ( 4 ) verzichtet.

Die Gelenkstangen ( 4 ) enden jeweils in einem frei beweglichem Gelenk ( 5 ) und werden im Untersatz durch massive Führungen ( 6 ) in der Richtung gehalten, in denen auch die unteren Gelenkte eingebettet sind.

Diese Gelenkstangen ( 4 ) erfüllen mehrere Aufgaben. Sie müssen einmal die auf die seitlichen Einzelkolbenflächen auftretenden Druckkräfte sicher aufnehmen und an den Untersatz ( 3 ) mitteilen. Sie müssen Sorge tragen, daß die Einzelkolben ( 1 ) in der Ausgangsstellung dicht und ohne große Toleranz nebeneinander und auf dem Untersatz ( 3 ) an-und aufliegen.Sie machen weiterhin eine gerichtete Drehbewegung der Einzelkolben,die bei dieser Drehbedwegung immer aufrecht stehen müssen, möglich machen.

Diese gerichtete Drehbewegung ( 7 ) zeichnet sich dadurch aus, daß der Einzelkolben in gleicher Ausrichtung wie in der Ausgangstellung auf dem Untersatz ( 3 ) in die zu ihm gehörende Öffnung, ( 8 ) innerhalb des Untersatzes (3) eintauchen kann - und auch wieder in umgekehrter Richtung zurückgeführt werden kann in die Ausgangsstellung. Bei diesem Eintauchvorgang und dessen Umkehrung , durchläuft der Einzelkolben (1) u.a. die Bewegungsphasen (9) (1o),(11) und ( 12 ) in beiden Richtungen. Damit dieser,für die Funktion des Gesamtmechanismus sehr wichtige Vorgang, geordnet abläuft tragen neben den exakt ausgerichteten Gelenkstangen ( 4 ) in ihren Führungen (6) auch ein Führungsgestänge ( 13 ) Sorge, daß sich die Einzelkolben bei jedem Bewegunsablauf in der richtigen Stellung befinden. Dieses Führungsgestänge ( 13 ), das nicht mit dem Kolbensystem verbunden ist,sondern mit dem gehäuse, leitet die Einzelkolbenbewegung ein, führt sie weiter bis zum Untertauchen des Kolbens in den mit Flüssigkeit gefüllten inneren Hohlraum ( 8 ) des Untersatzes (3 ) und verhindert ebenso ein auftreiben aus dieser Flüssigkeit, so lange dies nicht erwünscht ist. Der Untersatz stellt einen (verwindungs-)steifer Kreisring aus Metall dar (außenseitig ein runder Rotationskörper ) in dem für jeden Einzelkolben eine zu ihm gehörende Eintauchöffnung ( 8 ) gehört, die durch Trennwände (Schotten ) (14) von der jeweils daneben liegenden Eintauchöffnung (8) dicht abgeschottet ist.

Diese Schottenwände (14) durchlaufen den ganzen Untersatz ( 3 ) und enden in den seitlichen Führungen (6), mit denen sie homogen verbunden sind, so daß jede Eintauchöffnung (8) bis auf die obere Eintauchöffnung ein absolut dichtes Gefäß bildet, in dem sich ein Flüssigkeitsspiegel bis zur Oberkante des Untersatzes aufbewaren und transportieren läßt.

Da der Untersatz (3), in dem die Eintauchöffnungen(8) untergebracht sind - einen Kreisring darstellt und die Eintauchöffnungen jedoch ausgerichtet zum Mittelpunkt (M) nebeneinanderliegen, sind die Eintauchöffnungen am äußeren Rande des Untersatzes entsprechend breiter als am inneren Rande des Kreisringes und die Schottwände (14) ,die die einzelnen Eintauchöffnungen voneinander trennen streben ebenfalls dem gemeinsamen Mittelpunkt ( M ) zu.

Folgerichtig , da die Eintauchöffnungen ,vom Mittelpunkt (M) gesehen,hinter der Ausgangstellung der Einzelkolben ( 1 ) angeordnet sind, ist eine breitere Öffnung als der Einzelkolben breit ist möglich-und Schottwände (14) passen ebenso noch zwischen die Einzelkolben im untergetauchtem Zustand.Zwischen den Schottwänden (14) und den Einzelkolben (1) ist genügend Luft, daß berührungsloses Eintauchen und Ausführen möglich ist.

Der gemeinsame Mittelpunkt ( M ) sowohl der Kolbenseitenflächen, als auch der Schottwände (14) stellt sicher,daß die Einzelkolben in der Ausgangsstellung dicht aneinanderliegen, beim Eintauchvorgang leicht auseinanderrücken und beim Zurückkehren in die Ausgangstellung wieder eng aneinanderliegen.

Die Eintauchöffnungen sind mit Flüssigkeit ( Wasser ) gefüllt,( bis zum obersten Rand) das der eintauchende Einzelkolben verdrängt um sein eigenes Volumen, so daß im eingetauchten Zustand der Einzelkolben von Flüssigkeit voll umflossen ist, dessen Oberkante ebenfalls mit der Oberkante des Untersatzes ( 3 ) identisch ist.

Auf dem Untersatz (3) ist ein versenkter Zahnkranz ( 16 ) umlaufend angeordnet,in den Zahnräder eingreifen können. Bei der Darlegung des Zylindersystemes ist zu vermerken, daß dies mit dem Mechanismusgehäuse ( 17 ) zusammenhängt und ein Teil davon darstellt.

Der Untersatzkreisring ( 3 ) durchläuft als Kolbensystem das ebenfalls rund angeordnete Gehäuse ( 17 ) und wird dabei durch verstellbare Rollenführungen ( 15 ) exakt getragen und geführt. Der gesamte Untersatzkreisring ist mittels dieser Rollenführung(15),die sich in sinnvollen Abständen entlang des kreisförmigen Gehäuses wiederholt, frei beweglich angeordnet.

Das Gehäuse ( 17 ) besteht aus ( hier ) sechzehn kreisförmigen nebeneinander liegenden Einzelgehäusen ( Behältnissen ) (18),die voneinander durch doppelte Trennwände ( 19) getrennt sind.Diese Trennwände sind zum Mittelpunkt ( M ) ausgerichtet - und ebenso wie die Einzelgehäuse ( 18 ) symetrich zum Kreis mit dem Mittelpunkt(M) angeordnet.

Diese Trennwände ( 19 ) trennen nicht nur die einzelnen gehäuse ( 18 ) voneinander, sondern nehmen auch die Zylinder ( 2o ) auf, die ebenso dem Mittelpunkt ( M ) zugeordnet sind, indem ihr Innenvolumen Teil eines Rotatioskörpers darstellt.Die Zylinder sind also kreisförmig gebogen reichen von Außenseite zu Außenseite der sich gegenüberliegenden Trennwände (19).

Die Zylinder sind innenseitige mit einer Dichtfläche ( 21 ) ausgekleidet, durch die ein gutes Durchgleiten gewährleistet ist - und die druckfest und in geringen Toleranzen plastisch sein muß, damit ein enges An-und Aufschmiegen um und auf die Kolbenaußenflächen gewährleistet ist.

Zylinder ( 2o ) und Dichtfläche (21) sind derart bemessen, daß sich die zu einem Kolbenband fest zusammengefügte Einzelkolben ( in der Ausgangsstellung ) zusammen mit dem Untersatz ( 3 ) absolut dicht (flüssigkeitsdicht) jedoch leichtgängig hindurchschieben können.

Die Zylinderbreite ist etwas größer als die Breite der Eintauchöffnung ( 8 ) , damit eine komplette Eintauchöffnung,einschließlich der zugehörenden Schottenwände (14) von einem Zylinder aufgenommen werden kann und diese innerhalb des Zylinders nach beiden Seiten hin abschließt.

Die einzelnen Gehäusekammern ( 18) sind abwechselnd an der Oberseite ( 22 ) geöffnet oder geschlossen, so daß eine -Gehäusekammer ( die rundum geschlossen ist ) bis auf die verbindenden Zylinderöffnungen ein in sich absolut dichtes Behältnis darstellt.

Die nachfolgende Gehäusekammer (18) ist neben den Zylinderöffnungen auch oberseitig ( 22 ) geöffnet (ohne Deckel) , damit an dieser Stelle Flüssigkeiten nachbesorgt werden können.

Dies wechselt immer miteinander ab, auf eine geschlossene folgt eine oben offene Gehäusekammer,

4

der wiederum eine geschlossene folgt.

Die allseitig geschlossenen Gehäusekammern sind mit einem Ventil ( 23 ) ausgerüstet, mit dessen Hilfe sich diese -Kammern mit einem Unterdruck ausrüsten lassen.(Vakuum ). Je nach vorgegebenem Druckgefälle im Gesamtsystem kann in den geschlossenen Kammern ein beliebiges Druckgefälle eingestellt werden.

Die nach oben offenen Gehäusekammern dienen der Aufnahme und des Nachschubes von Flüssigkeiten ( Wasser ) , die unter einem höheren statischen Druckgefälle stehen, als dies in der geschlossenen Kammer der Fall ist.

Von Gehäusekammer (18) zu Gehäusekammer(18) herscht also ein Druckunterschied, der um so höher ist, als die Flüssigkeit unter höherem Druck steht.

Die Zylinder sind nicht gleich gestaltet, sondern weisen -ebwechselnd einen differierenden Innenquerschnitt auf.Der Verbindungszylinder ( in Drehrichtung ) zwischen einer mit höherem Druckgefälle ausgestattetem (offenen) Gehäusekammer zu einer mit niedrigem Druck ausgerüsteten Kamme weist -die Querschnittesfläche aus, die dem Kolbensystem in der Ausgangsstellung entspricht, also Querschnittsfläche des Untersatzes zuzüglich Querschnittsfläche des Einzelkolbens. Der Verbindungszylinder ( in Drehrichtung gesehen ) der den Niedrigdruckbereich mit dem höheren Druckbereich (Kammer) verbindet zeichnet sich durch eine wesentlich klei nere Querschnittsfläche aus, nämlich lediglich mit der Querschnittsfläche des Untersatzes ( 3 ) alleine,weil beim passieren dieses Zylinders die Einzelkolben (1)in die Eintauchöffnung (8) eingetaucht sind.

Diese Zylindergestaltung wiederholt sich ständig.

Die Zylinderfläche, auf der die statische Säule der zugelaufenen Flüssigkeit steht ist um die Querschnittsfläche der Einzelkolben größer.

Die Kräfte, die von beiden Seiten den Untersatzring(3) betreffen, heben sich gegenseitig auf, es verbleibt eine wirksame Mehrfläche dem höheren Druckbereich ausgesetzt, an der dieser angreifen kann. (drücken kann )

Diese verbleibende resultierende Kraft, die direkt abhängig ist von der Größe der wirksamen Seitenflächen der Einzelkolben und dem Druckunterschied zwischen den aufeinanderfolgenden Gehäusen wirkt (hier) gleich achtmal, da bei der sechzehnteiligen Gehäuseauftelung achtmal der Ausgangszustand der Einzelkolben vorliegt - und ständig acht Kolbenbereiche des gesamten Kolbensystems auf der einen Seite dem höheren Druck ausgesetzt sind.

Diese Kraft ist es, die das Kolbensystem durch die Zylinder preßt und in Bewegung setzt.

Zur weiteren Erläuterung wird kurz wiederholt und vorgetragen :

Die Einzelkolben (1) bilden in der Ausgangsstellung einen fest zusammenhängenden Ring,der ebenso fest auf dem Untersatz ( 3 ) aufsitzt.In diesem Ausgangszustand, der mittels den Gelenkstangen ( 4) und mittels dem Führungsgestänge ( 13 ) in jedem Hochdruckbereich eingenommen wird, werden die dicht aneinanderliegenden Einzelkolben durch den Zylinder in den Niederdruckbereich gepreßt.

In dem Behältnis mit Niederdruck werden die Einzelzylinder wiederum durch die Gelenkstangen und das Führungsgestänge veranlaßt in die Eintauchöffnung (8) einzutauchen,die Flüssigkeit darin wird verdrängt und sammelt sich auf dem Gehäuseboden an.Die Flüssigkeit in der Eintauchöffnung sammelt sich von selbst in dem Hochdruckbereich darin an und wird als " Trägerflüssigkeit" durch den Zylinder mitge - schleppt.Bei diesem Vorgang ist die gesamte Eintauchöffnung einschließlich der Zwischenräume zwischen den Führungen (6) mit Flüssigkeit ausgefüllt.

Da Flüssigkeiten ( Wasser ) praktisch unkompressibel ist, füllt die Trägerflüssigkeit die Eintauchöffnung sowohl im Hochdruckgehäuse ganz, als auch im Niederdruckgehäuse vermindert durch das Volumen des Einzelkolbens bis zur oberen Kante - leidenschaftslos aus. Zu keinem Zeitpunkt gibt es durch den Zylinder eine Verbindung der verschieden gespannten Druckbereiche, da der Zylinder breiter ist als die eintauchöffnung breit ist und somit inner eine Wandstärke der Schotten (14) zwischen den verschieden gespannten Systemen an den Zylinderinnenwandungen anliegt.Damit der leichter Einzelkolben nicht in der Flüssigkeit des Eintauchbehälters vor dessen Erreichen des nächsten Zylinders auftreibt,wird bis zu diesem Zeitpunkt durch das Führungsgestänge (13) untergehalten. Im nachfolgenden Zylinder hält die Zylinderwandung den Einzelkolben unten.

Das Kolbensystem verläßt dann den Verbindungszylinder zwischen Niederdruckbereich zum Hochdruckbereich im eingetauchten Zustand.Sowie dieser Zylinder passiert ist werden die Einzelkolben aufschwimmen,werden sogleich von dem Führungsgestänge (13) gefaßt und wieder in die Ausgangsstellung zurückgebracht, um hier sich wieder zusammenzuschließen und bereit zu sein für die Wiederholung des vorbeschriebenen Vorganges.Je Umdrehung passiert dies achtmal. Der beschriebene Vorgang wiederholt sich ständig und ohne Unterbrechung.

Nach der vorbeschriebenen Arbeitsweise geht dies solange, solange die verdrängte Flüssigkeit ( Wasser ) in dem Unterdruckbehältnis nicht überhand nimmt.

Die in den Unterdruckbereichen (Gehäusen) angesammelte Flüssigkeit ist demgemäß schnellstmöglich abzuführen und zwar in einer Art und Weise, daß die voraufgeführten resultierenden Kräfte nicht zuviel dafür in Anspruch genommen werden.

Dies wird anhand von vier, drei Ausführungswege darstellende Zeichnungen erläutert :

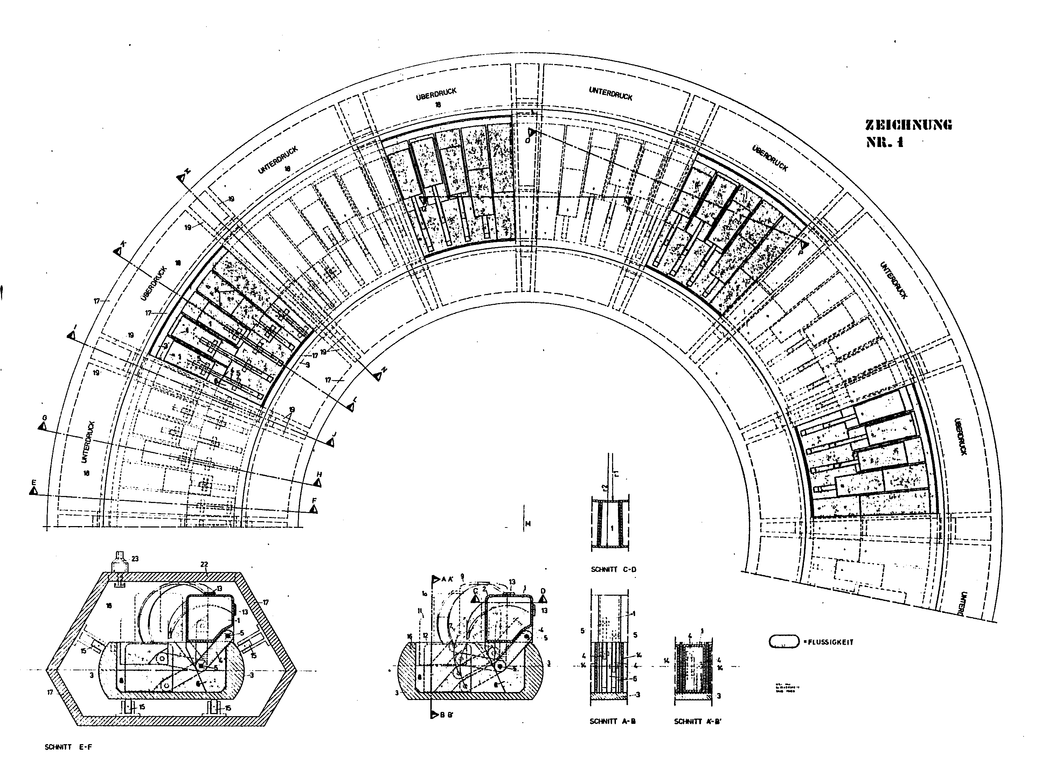

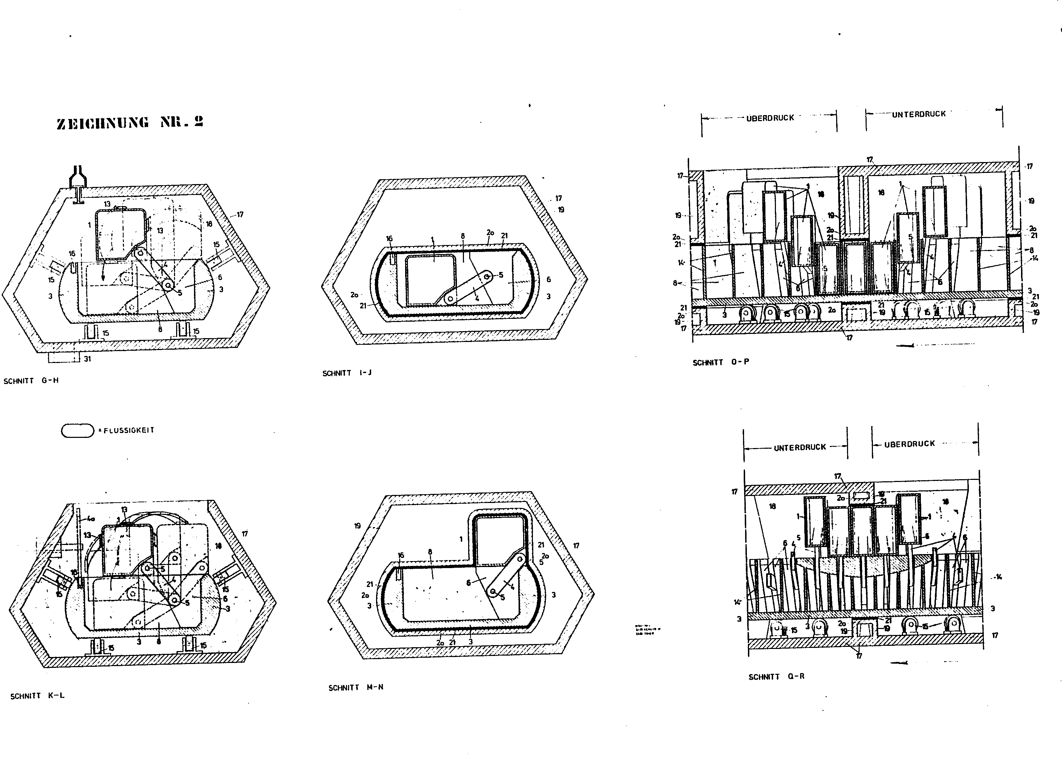

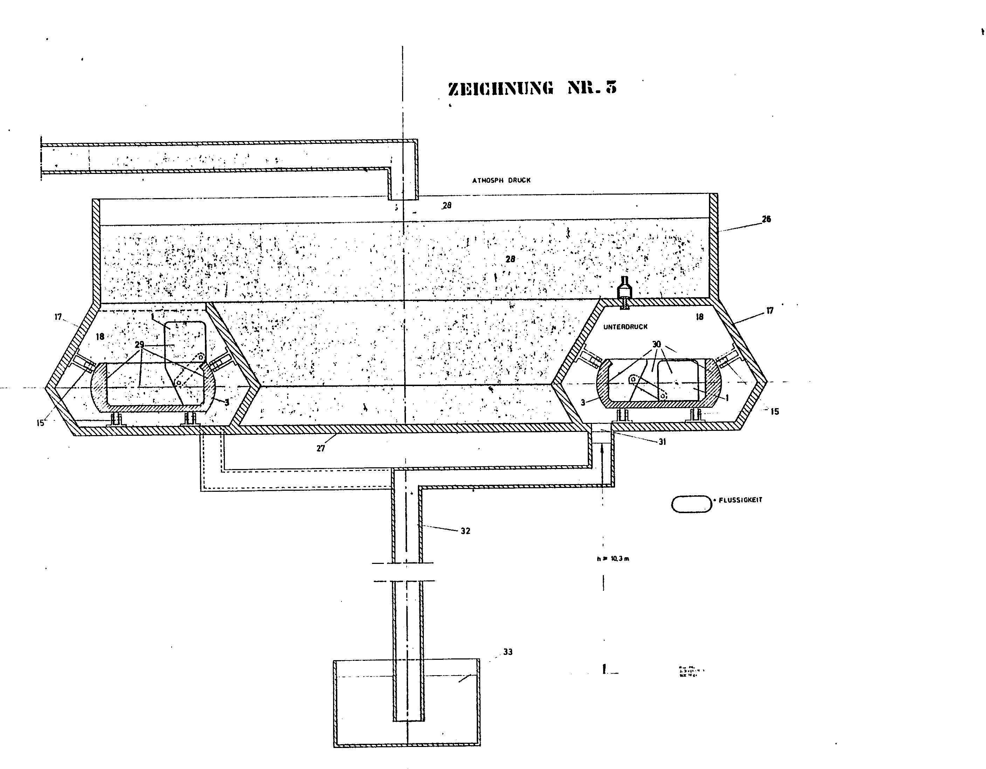

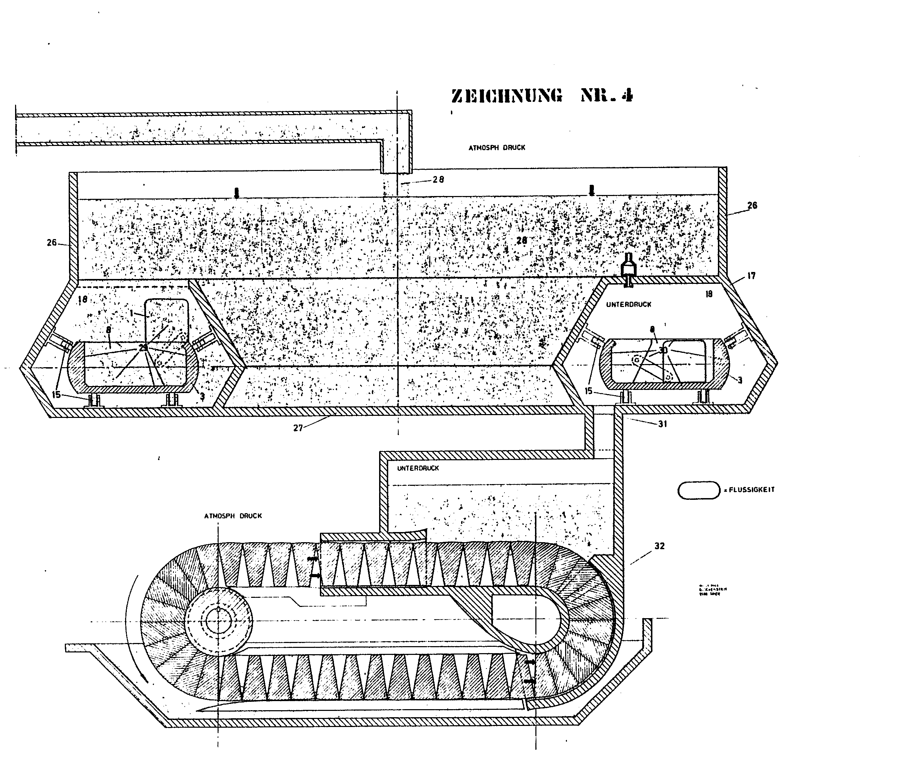

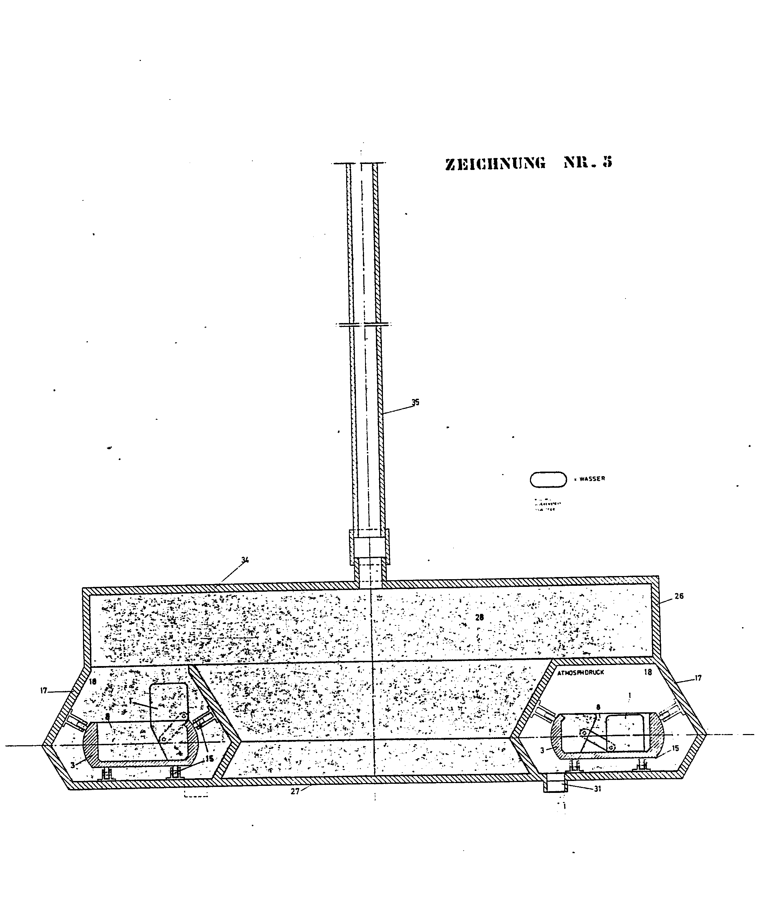

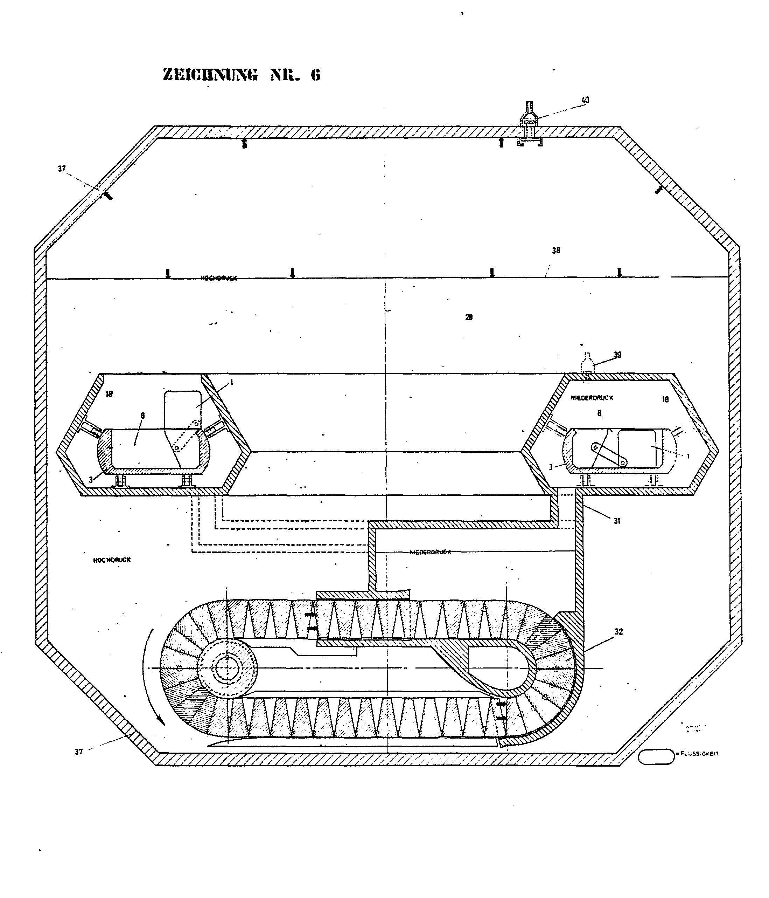

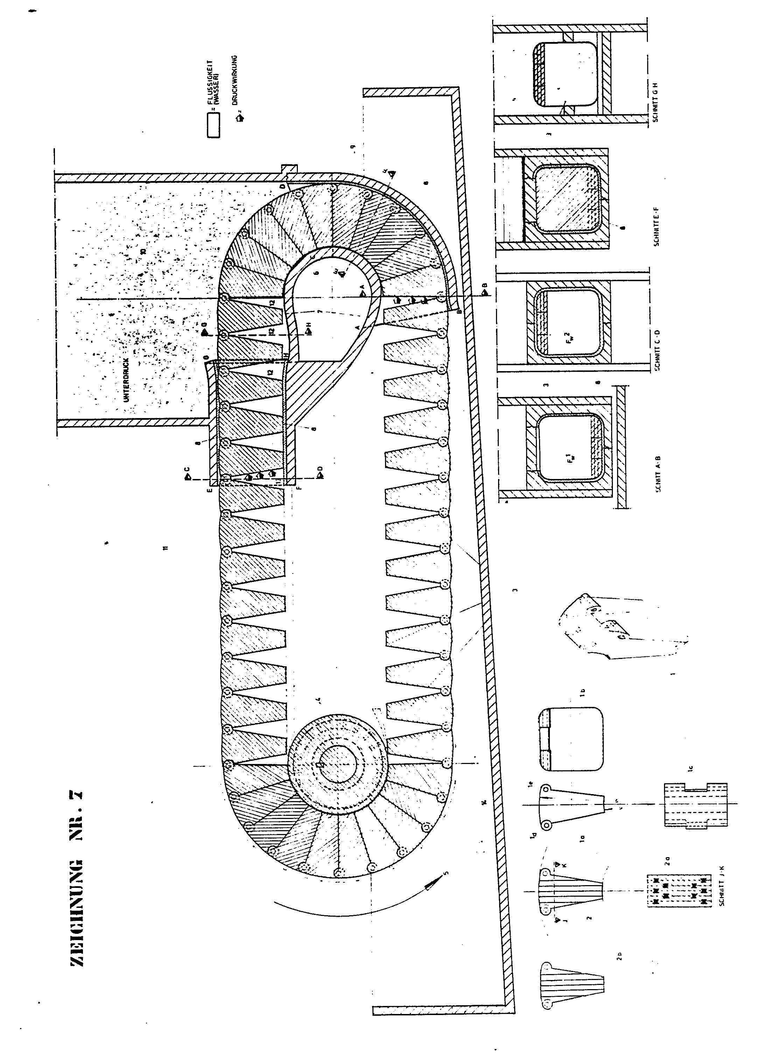

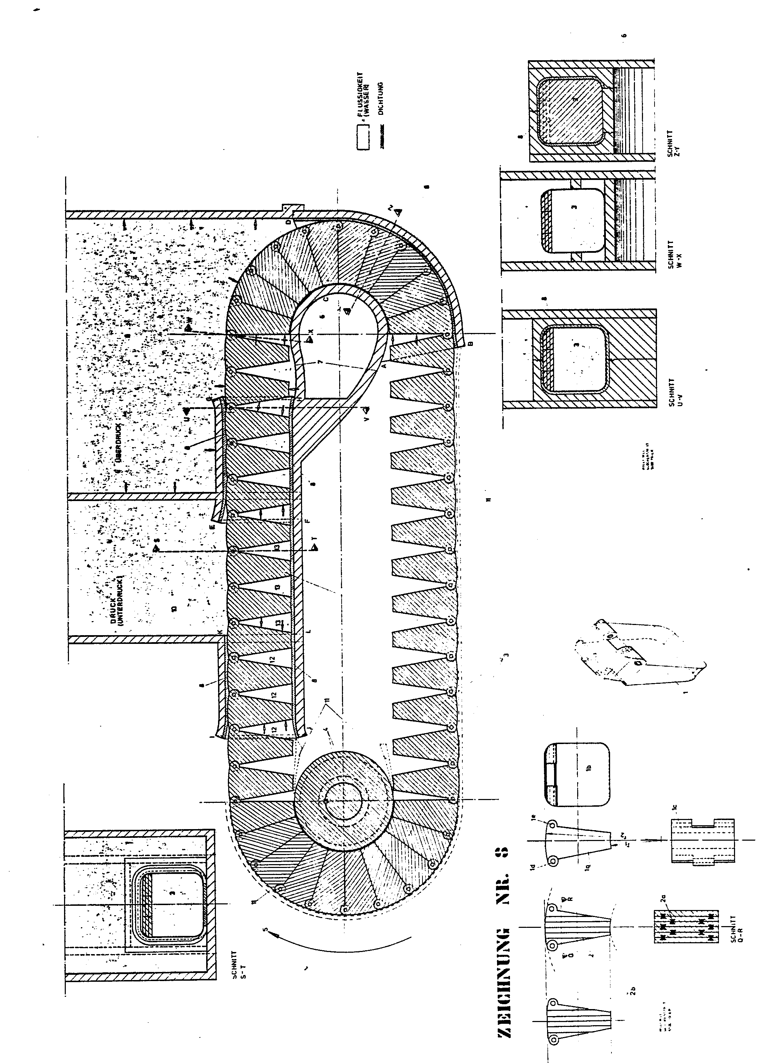

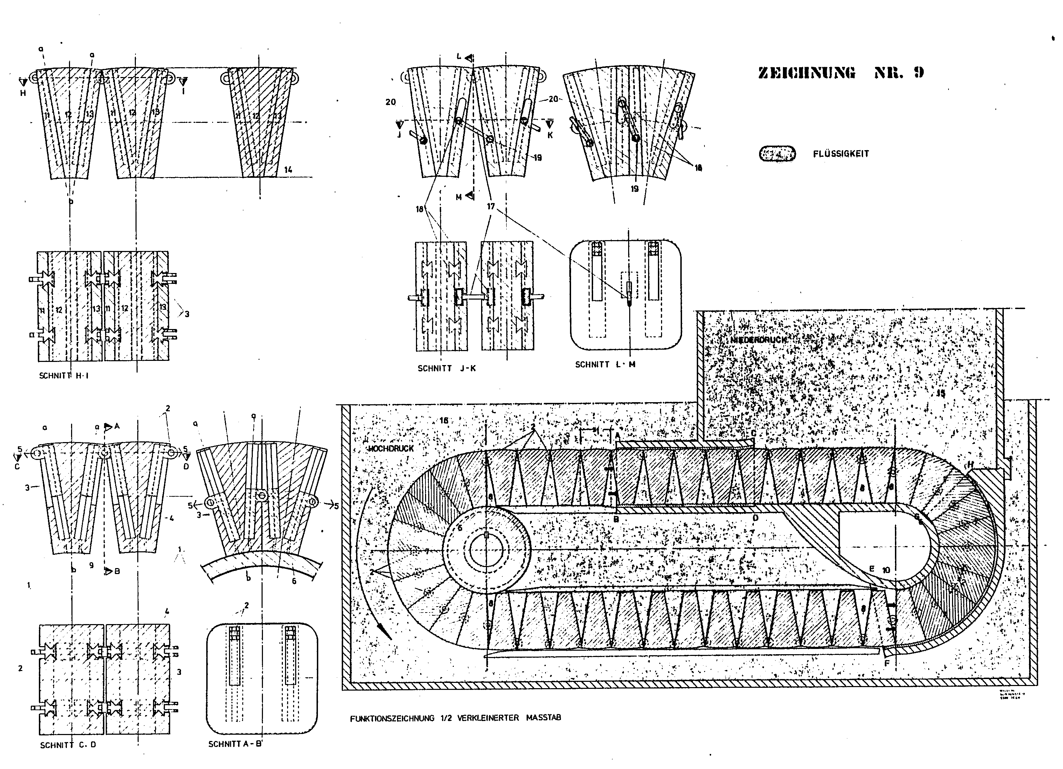

Ausführungsweg a ) Zeichnung Nr. 3 und Nr. 4 Ausführungsweg b ) Zeichnung Nr. 5 Ausführungsweg c ) Zeichnung Nr. 6

## zu a ) Funktionsweise mit atmosphärischem Druck

Das Gehäuse und die einzelnen kammern sind außenseitig oben mit einer umlaufenden Seitenwand ( 26 ) und unten mit einem Boden ( 27 ) in der Art verbunden,daß das Gehäuse mit den Wänden (26 + 27) eine Flüssigkeitswanne bildet, in der sich Flüssigkeit, die hier drucklos zuläuft ansammelt ( 28 ).

Auf dieser Flüssigkeit lastet der atmosphärische Druck. Alle Zylinder liegen unterhalb des Flüssigkeitsspiegels.

Nach der im Vortext beschriebenen Verfahren , ist es notwendig, die Unterdruckkammern einmal mit einem Unterdruck ( Vakuum) zu versehen.Dies zu bewerkstelligen ist gängiger Stand der Technik und bedarf keiner weiteren Erklärung.

Während also in den allseitig geschlossenen und dichten Unterdruckbereichen kein Druck vorliegt, herscht in allen andern Kammern zumindest das atmosphärische Druckgefälle von ca. 1 kp/qcm.Dieser Überdruck drückt auf die größere Kolbenfläche ( 29 ) und schiebt das Kolbensystem in den Unterdruckbereich.Mit jedem Einzelkolben der durchgeschoben ( gepreßt ) wird, wandert automatisch die zugehörige Eintauchöffnung (8) innerhalb des Untersatzringes (3) mit, die sich in der Überdrukkammer voll mit der Trägerflüssigkeit ( Wasser ) aufgefüllt hat.Gelenkstangen (4), in Verbindung mit dem Führungsgestänge (13) drücken die Einzelkolben unter die Wasseroberfläche innerhalb der Tauchöffnung und verdrängen diese Flüssigkeit zum Teil.

In dieser Tauchstellung und mit dem um die Einzelkobenfläche verminderten Querschnitt (3o) tritt das Kolbensystem in den Verbindungszylinder, der das Niederdruckbehältnis mit dem Hochdruckbehältnis ( Gehäusekammer ) verbindet,ein, durchläuft diesen um mit dem verminderten Querschnitt in das danach angeordneten Behältnis mit höherem Druck herauszukommen. Hier werden die Einzelkolben wieder in die Ausgangsttellung gebracht und der ganze Vorgang wiederholt sich wiederum von neuem.

Die eintauchenden Einzelkolben in den Unterdruckgehäusekammern verdrängen aus der mitgenommenen Flüssigkeit in den Eintauchöffnungen ihr eigenes Volumen.

Diese Flüssigkeit wird aus dem Kolbensystem durch das Eintauchen des Einzelkolbens herausgespült und sammelt sich am Bodem der Niedrigdrukkammer an und wird über den an jeder Niedrigdruckkammer angebrachten unteren Ablauf ( 31) abgeführt.

Wenn die örtlichen Gegebenheiten es zulassen, münden die Abläufe ( 31 ) in einem druckfestem Standrohr ( 32 ), das am unteren Ende in einem Überlauf ( 33 ) endet,der sicherstellt, daß von unten nur Flüssigkeit ( und keine Luft ) in das Standrohr eindringen kann.Das Standrohr (32), mit dem gleichen Unterdruck, wie die Niedrigdruckgehäusekammer versehen muß eine Höhe von ca. 1o,3 m aufweisen,da der -außen herschende atmosphärische Druck die verdrängte und abgeführte Flüssigkeit in diesem Standrohr, über den Überlauf (33) ca.10,3m (Meeresspiegelniveau) hochdrückt.

Übersteigt durch ständigen Zulauf aus den Niedrigdruckkammern die in dem Standrohr angesammelte Flüssigkeitssäule die Höhe von ca. 1o,3m, so läuft unter über den -Überlauf automatisch die entsprechende Flüssigkeitsmenge ab und die Flüssigkeitssäule im Standrohr regelt sich abhängig vom Außendruck ständig selbstständig ein.

Wichtig ist, daß sich der einmal künstlich erzeugte Unterdruck in der Niedrigdruckkammer bei dem ganzen Verfahren nicht mehr ändert.Dies wäre nur dann möglich wenn an irgendeiner Stelle (atmosphäriche ) Luft darin eintreten würde. Dies ist jedoch ausgeschlossen,da die Zylinder -alle unter dem Wasserspiegel des Sammelbehälters liegen.

Selbst bei nicht idealer Abdichtung zwischen dem Kolbensystem und den Zylindern träte an dieser Stelle nur Flüssigkeit ein, die , da unkompressibel, ebenso abgeführt wird,wie vor beschrieben. Die Eintauchöffnungen (8) schleppen beim Durchdringen der Zylinder außer ihrer eigenen (metallenen) Masse nur Flüssigkeit mit.Es kann von keiner Seite, auch nicht von Seiten des Standrohres je Luft in die Unterdruckkammern eindringen, so daß sichergestellt ist, daß sich der darin einmal befindliche Unterdruck während des ganzen Betriebes des Mechanismusses niemals abbaut.Der Unterdruck in den Niedrigdruckkammern und dessen selbstständiger dauernafter Erhalt ist grundlegendes Merkmal dieser Systemanordnung.

Die höheren atmosphärischen Drücke , die in den Hochdruckgehäusekammern auf die größeren Kolbenfläsche drücken, manifestieren sich hier in Abhängigkeit von der Größe der Einzelkolbenfläsche in eine Kraft, die das Kolbensystem in Bewegung setzt und in Bewegung hält.

Angelehnt-und zum Verständnis beitragend, darf noch einmal auf den Versuch des Herrn Otto von Guericke hingewiesen -werden.

Bei diesem Versuch handelte es sich um ein Einmalereignis, als nämlich die 8 Pferde die ca 12oo,-qcm Hohlkugel auseinandergezogen hatten,war der Vorgang beendet.

Bei dem hier dargelegtem Mechanismus passiert im wesentiich ständig der gleiche Vorgang, der jedoch nicht beendet wird, sondern sich dynamisch und ständig wiederholt und dies gleich achtmal bei der hier dargelegten Aufteilung in sechzehn aufeinanderfolgende Gehäusekammern,die bei dieser Anordnung die Installtion von 8 Arbeitzylindern erlauben.

Wenn die Darlegung und der Vergleich erlaubt ist,so ziehen an dem Kolbensystem, bei einer Einzelkolbenfläche von ca. 1.2oo,-qcm acht mal acht = vierundsechzig Pferde und dies ständig, ohne müde zu werden.

Es ist nicht immer möglich oder zweckmäßig ein über -1o,-m langes Standrohr zum Abführen der verdrängten Trägerflüssigkeiten zu installieren.

Hier wird Abhilfe geschaffen,indem hinter die Abläufe ( 31 ) der in den Unteransprüchen Nr. I und Nr. II vorgestellte Pumpmechanismus ( 32 ) nachgeschaltet wird, der durch die ihm eigene Charakteristik hier geeigneten und zweckentsprechenden Einsatz findet.

<u>zu b )</u> <u>Funktionsweise</u> <u>mit</u> <u>einer</u> <u>statischen</u> <u>Wassersäule</u>

Die Kammergehäuse (18) werden zusätzlich zu den seitlichen Wandungen (26) und dem unteren Boden ( 27) mit einer druckfesten oberen Abdeckung ( 34 ) versehen,in die ein Zulauf ( 35 ),ebenfalls druckfest, einmündet,über den sich eine stehende Wassersäule entleert.Der beständige statische Druck dieser Wassersäule,vermittelt ihren Druck der in dem Reservor (28) vorhandenen Flüssigkeit.

Bei dieser Funktionsweise ist es nicht mehr nötig die Undruckkammern extra mit einem Unterdruck zu versehen, da der nunmehr darin befindliche atmosphärische Druck einen Unterdruck zu der durch die Wassersäule hochgespannten -Flüssigkeit darstellt.

Nach dem gleichen Arbeitsprinzip wie in den Vortexten beschrieben,vermittelt das unter höherem Druck stehende -Wasser über das Kolbensystem und die "Arbeistzylinder"eine Kraft auf das Kolbensystem, die sich in Abhängigkeit von dem Druckgefälle zwischen den einzelnen Kammern und der wirksamen Einzelkolbenfläche dahingehend auswirkt, daß der Mechanismus sich zu einer Drehbewegung entschließt.

Auch hier sammelt sich die durch die Eintauchvorgänge verdrängt Flüssigkeit am Bodem der Niedrigdrukkammern an und wird über die Abläufe (31) einfachst abgeführt,da nach außen hin keinerlei Druckgefälle mehr besteht.

Auch hier wird sich das Nierigdruckniveau in den Niedrigdruckkammern niemals ändern.Ein gleichmäßiger Zulauf von Flüssigkeiten (Wasser ) denen ein statisch höherer Druck zu eigen ist , ermöglicht eine Arbeitsausbeute aus diesem Me chanismus.

Die verbrauchte Wassermenge richtet sich nach dem Volumen der Einzelkolben, deren Eintauchhäufigkeit bei einer Umdrehung des Kolbensystemes und dessen Umdrehungsgeschwindigkeit.

Entsprechend einer Aufteilung wie vorgestellt , mit acht ständigen Arbeitsgängen, verachtfacht sich die wirksame Kraft.

<u>Beispiel :</u>

Umdrehung je Minute = 1
Einzelkolbenfläche  ca.34,6x34,6cm   = ca.1.2oo,-qcm angenommene Höhe der statischen Wassersäule = 1o,-m = 1o,-kp/qcm
1.2oo,-qcm x 1o,-kp/qcm x 8 = 96.000,-kp

Das zur Erläuterung sicherlich sinnvolle Beispiel sagt aus, bei den oben aufgeführten Vorgaben eine Kraft auf das Kolbensystem von 96.000,-kp wirkt.

Dem steht aber ein Flüssigkeitsverbrauch von nur ca. 136, 1je sec. gegenüber .

Bei Erhöhrung des statischen Druckes auf 20 kp/qcm, also entsprechend einer Wassersäule von 2o,-m,verdoppelt sich die wirksame Kraft, nämlich auf 192.ooo,-kp, jedoch der Flüssigkeitsverbrauch verbleibt konstant bei 136,-1/sec.bei konstanter Einstellung des Systemes auf eine Umdrehung je Minute.

## zu c ) Funktionsweise mit künstlich geschaffenem Drucksystem

Das gesamte Mechanismusgehäuse mit den einzelnen Kammern (18) wird komplett innerhalb eines außerordentlich druckbeständigem Behälters (37) ( Windkessel) installiert.Dieser Druckbehälter ist derart ausgelegt, daß er sehr hohe Innendruckverhältnisse aufzubewahren in der Lage ist.

Die Abläufe (31) aus den Niedrigdruckkammern münden in einen Pumpmechanismus (32) ,wie er in den Unteransprüchen Nr. I -und Nr.III erläutert ist.

Der Windkessel (37) ist soweit mit Flüssigkeit (28) gefüllt, daß die einzelnen Gehäusekammern und Zylinder unterhalb des Flüssigkeitsspiegels ( 38 ) liegen. Die allseitig geschlossenen Niedrigdruckkammern,werden über ein Ventil ( 39) mit Gas ( Luft ) gefüllt,das sich ständig in diesen Kammern befinden wird und keine Möglichkeit zum Entweischen hat.

Der Windkessel ( 37) wird über ein weiteres Ventil(4o) mit einem starkem Überdruck versehen,der als hochgedrücktes Luftpolster ( Gaspolster ) auf dem Flüssigkeitsspiegel (38) auflastet und der gesamten "Trägerflüssigkeit" die in diesem Fall nicht unbedingt Wasser zu sein braucht, diesen Hochdruck mitteilt.

Die in den Vortexten beschriebene Arbeitsweise tritt auch hier ein. Die hochgesdrückte Trägerflüssigkeit vermittelt den Druck an das Kolbensystem, an dem er sich in Abhängigkeit von der Einzelkolbenfläche und dem tatsächlichen -Druckunterschied zwischen den einzelnen Kammern als beständige Kraft auswirkt, der den Mechanismus in Bewegung setzt und hält.

Die verdrängten Flüssigkeistmengen in den Niedrigdruckkammern wird über das Pumpsystem ( 32 ) immer wieder der Gesamtflüssigkeitsmenge zugeführt und dies in einem mindereren Arbeitsaufwand , wie in den Unteransprüchen Nr. I und Nr. III beschrieben.

Alle einmal sich eingependelten Druckverhältnisse innerhalb des Mechanismusses ändern sich während des gesamten Betriebes nicht mehr, da in die Niedrigdruckkammern nur Flüssigkeit eindringen kann,die ,da umkompressibel in beiden Drucksystemen das gleiche Volumen einnimmt.

Eine Flüssigkeistzufuhr, über das erstmalige Auffüllen des Windkessel hinaus,ist nicht mehr erforderlich.

Es handelt sich hierbei um ein geschlossenes System, daß unabhängig von äußeren Bedingungen überall funktionell zu arbeiten in der Lage ist.

Bei gleichmäßiger Einstellung des Systemes auf eine vorgegegebene Umderehungszahl wird, immer nur die gleiche Menge an Flüssigkeit durch den mechanismus geschleust.

Beispiel

-bei ca. 34,6 x 34,6 cm = ca.1.2oo,-qcm Größe der Einzelkolbenflächen und einem aufgebauten Überdruck in dem Windkessel von 1oo kp/qcm, einer achtteiligen Arbeitszylinderaufteilung, wie hier beschrieben und einer Einstellung des Gesamtsystemes auf eine einmalige Umdrehung je Minute ergibt sich nachfolgendes Bild :

Kraft = Druck x Fläche x n

Kraft = 1oo kp/qcm x 1.2oo,-qcm x 8

Kraft = 9.6oo.ooo kp

Dabei ist das bei einer Umdrehung anfallende verdrängte Flüssigkeitsvulumen 8,14 cbm , das entspricht einer notwendig Pumpleistung des Pumpmechanismusses von rund 136,-1/sec.

Ein nicht unmerklicher Teil der Arbeit, die der Antriebsmechanismus erbringt ist abzuzweigen für den Pumpmechanismus, für die innere Reibung, Trägheit und sonstige Verluste, wie sie bei mechanischen Geräten dieser Art vorliegen.

Der Erläterung dienlich ist auch hier der Hinweis, daß bei doppeltem Druckgefälle innerhalb des Windkessels, wie in dem oben angegebenen Beispiel,die Kraft sich verdoppelt,die zurückzupumpende Flüssigkeitsmenge jedoch gleich bleibt bei gleicher Umderehungszahl.Da der Pumpmechanismus (32) in nur geringerem Maße bei der Zurückbeförderung der Flüssigkeit gegen den Innendruck anzuarbeiten braucht, wie dies bei -herkömmlichen Pumpsystemen der Fall ist, wird mit der Steigerung des Innendruck das Verhältnis zwischen der möglichen Arbeitsausbeute und den inneren Verlusten des Gesamtsystemes immer günstiger.

8

Diese Arbeitsausbeute läßt sich über den m Untersatz(3) eingelassenen inneren Zahnkranz ( 16 über Zahnräder(4o) eine Welle,durch Simmerringe abgedichtet,aus dem System transferieren. Letzteres, ebenso wie der Antrieb des Pumpmechanismusses (32 ) ist bekannter Stand der Technik und bedarf keiner weiteren Darlegung.

**Ansprüche**

Antriebsmechanismus,bestehend aus einzelnen,hohlen,an -den Ecken abgerundeten(2) Einzelkolben (1)-,die auf einem kreisringförmigen Untersatz( 3 ) in der Ausgangsstellung zueinander und zu dem Untersatz ( 3 ) dicht ansitzen -und die mittels Gelenkverbindungen (Gelenkstangen) (4), diese im Einzelkolben (1) und im Untersatz (3) in frei beweglichen Lagern ( 5)befestigt,beweglich mit dem Untersatzring (3) verbunden sind -in der Art, daß eine gerichtete Eintauchbewegung in die Eintauchöffnung (8) des Untersatzringes in gewünschter Stellung des Einzelkolbens ermöglicht wird (7).Das Eintauchen jedes Einzelkolbens (1) in die ihm zugehörige Eintauchöffnung (8) wird mittels den in Führungen ( 6)laufenden Gelenkstangen (4) in Verbindung mit einem Führungsgestänge (13) ermöglicht.Ziel der gerichteten Kreisbewegung (7) ist,die Einzelkolben für bestimmte Zeitabstände in die Eintauchöffnung (8) zu verbringen und dabei das in diesen Öffnungen (8) befindliche Wasser ( Flüssigkeit ) zu verdrängen.Ebenso wie dieser Eintauchvorgang abläuft wird mittels dem Führungsgestänge (13) und den Gelenkstangen (4) dieser Vorgang auch in umgekehrter Richtung, nämlich das Zurückbringen des Einzelkolbens in die Ausgangsstellung bewerkstelligt,wobei der Einzelkolben bei jedem Vorgang u.a.die Phasen (9) (10) (11) und (12) durchläuft .
Voraufgeführtes Kolbensystem läuft mittels einer Rollenführung ( 15) durch einzelne,hintereinandergereihte Gehäuse ( Kammern) (18) ,die kreissymetrich angeordnet sind, mittels doppelten Trennwänden (19) voneinander getrennt -sind, in den auch die Zylinder (2o) mit den inneren Ab dichtungsflächen (21) angeordnet sind.Die Zylinder (2o), ebenso,wie Einzelkolben (1),ebenso wie Schottwände (19) als dichte Abtrennungen zwischen den Eintauchöffnungen (8) haben einen gemeinsamen Mittelpunkt (M) und sind danach ausgerichtet.
Die Zylinder passen sich in ihrer inneren Querschnittsfläche den verschiedenen Zuständen des Untersatzringes mit den darauf-oder darin befindlichen Einzelkolben. in der Art an, daß jeder Volumenzustand des Untersatzringes exakt durch den dafür zuständigen Zylinder dicht hindurchgeführt werden kann.
Die durch die Zylinder (2o) und den Kammertrennwänden(19) voneinander getrennte einzelnen Kammern-(18) sind derart ausgelegt, daß das sich jeweils darin befindliche Medium verschiedenen Drücke aufnehmen kann. Die allseitig geschlossenen Kammern (18) nehmen dabei immer Unterdrücke auf, die offenen Kammern nehmen die höheren Drücke auf, bezw. die höheren Drücke werden in den offenen Kammern wirksam an das Kolbesystem herangeführt.
So ist die Zylinderquerschnittsfläche des Zylinders (2o), der von einer höheren Druckkammer in eine Niederdruckkammer führt,identisch mit der Querschnittsfläche die sich zusammensetzt aus dem Untersatzring (3) und dem darauf in Ausgangsstellung aufsitzendem Einzelkolben (1).Der Zylinder, der, in Drehrichtung gesehen, zwischen einer Niederdruckkammer und einer mit höherem Druckausgerüsteten Kammer vorliegt, ist dahingehend in der Querschnittesfläche nur so groß wie der Untersatzring (3) indessen Eintauchöffnungen(8) zu diesem Zeitpunkt die Einzelkolben (1) eingetaucht sind. Die Zylinder unterscheiden sich nacheinanderfolgend in -ihrem Querschnitt um die Fläche des Einzelkolbens. Die höheren Drücke in den Überdruckkammern führen in Verbindung mit der Einzelkolbenfläche zu einer Kraft,die auf die Einzelkolben einwirkt und das Kolbensystem bewegt.Sind die Einzelkolben durch den Zylinder in die Niederdruckkammer eingedrungen,tauchen sie in die Öffnungen (8) in dem Untersatzring (3) ein,verdrängen die sich darin befindliche Flüssigkeit (Trägerflüssigkeit)um ihr eigenes Volumen,das abgeführt wird - und verlassen den Niederdruckbereich in diesem Tauchzustand, so das das Kolbensystem volumen-und querschnittsreduziert in den dann folgenden höheren Druckbereich (Kammer ) eindringen kann.
Der voraufgeführte Mechanismus,bei dem die größere Kolbenfläche von dem höheren Druckbereich in den niederen Druckbereich gepreßt wird und kleinere Kolbenflächen von dem Niederdruckbereich in den höheren Druckbereich zurückgeführt werden,weil die Einzelkolben (1) zwischenzeitlich in die Eintauchöffnungen (8) eingetaucht sind und die darin befindliche Flüssigkeit verdrängen, ist dadurch gekennzeichnet, daß dabei eine Kraftresultierende zur Arbeitsausbeute übrig bleibt, die, wie in den Ausführungsvarianten a),b) und c) dargelegt , sich dadurch auszeichnet, daß durch atmosphärischen Druck, den Druck einer statischen Wassersäule, oder der Druck innerhalb eines künstlich geschaffenen Drucksystemes,ein ständiger Arbeitsvorgang geschaffen wird,der eine Ausbeute ermöglicht und das dabei dei verschiedenen Drucksysteme sich nicht abbauen, sondern , einmal vorhanden oder erstellt, ständig konstant erhalten bleiben.

9

**Unteranspruch** NR. I

Pumpmechanismus für Medien, vorzugsweise Flüssigkeiten

Die Erfindung bezeiht sich auf einen Pumpmechanismus,der Flüssigkeiten von einem ( niederen ) Druckniveau in ein anderes ( hohes ) Druckniveau ( Behältnis) transportiert.

Pumpen ermöglichen grundsätzlich den Tranpsort von Medien oder ermöglichen hohe und niedere Drucksysteme aufzubauen und zu erhalten.

Es gibt vielfältige Pumpen oder Pumpmechanismen,wie Kolbenpumpen,Kreiselpumpen,Zahnradpumpen, je nach Auslegung langsam-bezw. schnellaufend,die fester Bestandteil unserer heutigen Technik darstellen.

Allen diesen Pumpen und Pumpmechanismen ist eins zu eigen.Wenn sie ein Medium ( Flüssigkeit ) aus einem Niedrigdrucksystem ( Behältnis ) in ein höheres Drucksystem ( Behältnis ) verbringen, müssen sie grundsätzlich einen Arbeitsaufwand erbringen, um den statische höheren Druck zu überwinden.

Hier will die Erfindung Abhilfe schaffen.Die Erfindung, wie sie in den Ansprüchen gekennzeichnet ist, löst die vorbeschriebene Pumpaufgabe,nämlich ein Medium ( Flüssigkeit )in ein höheres Drucksystem einzupumpen - ohne den üblich hohen Arbeitsaufwand zur Überwindung des statischen Druckgefälles aufbringen zu müssen.

Die durch diese Erfindung erreichten Vorteile sind darin zu sehen,daß in den Bereichen, in denen dieser Pumpmechanismus eingesetzt werden kann mit geringerem Energieaufwand gearbeitet werden kann.Ein weiterer großer Vorteil ist, daß zwei verschiedene Medien, z.B. ein Gas und eine Flüssigkeit während des Pumpvorganges voneinander getrennt bleiben,was für verschiedene Anwendungsgebiete von großem Vorteil ist.

Unter anderem ist dies für die hier in den Haupt-und Nebenansprüchen gesetzte Zielsetzung von entscheidendem Vorteil. Im folgendem wird die Erfindung anhand einer, den Ausführungsweg darstellenden Zeichnung ( Zeichnung Nr.7 ) erläutert.

Grundelement ist ein konisch geformter Körper aus Leichtmetall oder gleichwertigem Material,dessen Seitenflächen von oben nach unten schräg zueinander zulaufen und dessen untere und obere Fläche einen Segmentbogen darstellt. (1) (1a) (1b) (1c )An den Seitenflächen sind oben Gelenkscharniere ( 1d + 1e) angebracht, die mehrere Körper -dieser Art miteinander verbinden können.Diese Gelenkscharniere ermöglichen, daß die einzelnen, miteinander verbunden Körper (zug)-kraftschlüssig waagerecht bewegt werden können, aber auch um einen Kreisbogen herum bewegt werden , wobei sie sich eng aneinander - schmiegen.Diese Körper, die wir zum besseren Verständnis "Einzelkolben"nenen wollen, sind allseitig eben und plan bearbeitet,damit beim Zusammenschließen keinerlei Hohlräume vorhanden sind.

Beim Herumführen mehrerer miteinander verbundener Einzelkolben um einen Kreisbogen mit dem Radius $(r_1)$bilden diese ein homogenes, in sich dichtes und geschlossenes kreisrundes Scheibenelement mit dem äußeren Radius ( $r_2$).Die dies unter anderem ermöglichen oberen und unteren Segmentbögen sind hingegen bei der waagerechten Führung hinderlich. Um diese Behinderung weitgehendst abzubauen ist jeder Einzelkolben in mehrerer senkrechte Scheiben aufgeteilt (2) die einzeln miteinander absolut dicht und kraftschlüssig mittels Schwalbensschwanzverbindungselementen ( 2a ) verbunden sind. Diese Verbindung ist nur sowie erforderlich und entsprechend arretierbar,daß die enzelnen Scheiben des Einzelkolben sich bei waagerechter Bewegeung oben und unten annäherungsweis gerade ( 2 b ) anordnen können.

Die Höhe des Körpers ist dann sowohl in der Kreisführung,als auch in der waagerechten Bewegung annähernd gleich $(r_2-r_1)$. Dies stellt sicher, daß die Ansichtsflächen des Einzelkolbens bei beiden Bewegungsarten praktisch gleich groß sind. Zum weiteren Verständnis sollten wir eine Aneinanderreihung von mehreren Einzelkolben als " Kolbenband " -oder"Bandkolben" bezeichnen.

Ein endloses Kolbenband ( 3 ) ist Hauptfunktionselement des hier vorgestellten Pumpmechanismus,der an dem einen Ende um eine U-förmige Antriebswelle ( 4 ) herumläuft. Kraftschlüssigkeit mit dieser Welle wird z.B.erreicht durch abgefedert - geführte Stifte, die über eine feststehende Nockenwelle bewegt werden ,in die Einzelkoben greifen können und somit kraftübertragend wirken.

Die Antriebswelle dreht sich in Pfeilrichtung ( 5 ) Auf der gegenüberliegenden Seite führt das Kolbenband -ebenso um eine Welle, die wie vor beschrieben beweglich gelagert sein kann. Hier wurde jedoch einer feststehenden Welle den Vorzug gegeben,da sie in der Darstellung des Gesamtmechanismus Vorzüge ausweist.(6) Die Außenradien beider Wellen entsprechend demm Innenradius ( $r_1$) der Wölbung der unteren Einzelkolbenfläche, so daß ein absolut dichtes Anliegen sichergestellt ist. Die feststehende Welle ist ellipsoid an-und ausgeschwungen ( 7 ) , damit sich die Einzelkolben leicht auflegen und wieder abheben lassen.

Eine abgefederte Spanvorrichtung (nicht dargestellt) ermöglicht dies auch bei der Antriebswelle und stellt sicher ,daß der gesamte Bandkolben unter einer ständigen Spannung steht und sich ausrichtet.

Die rechtsseitig angeordnete , festehende Welle ist gleichzeitig innere Teilfläche eines Zylinders - und zwar eines -kreisförmiggebogenen Zylinders (A-B-C-D) dessen inneres durchgängiges Volumen exakt dem Volumen des an dieser Stelle zu einer geschlossenen Kreisscheibe geschlossenen Bandkolbens entspricht und an dessen Außenflächen unter zuhilfenahme einer plastischen,jedoch druckbeständigen Dichtfläche ( 8 ) abdichtend anliegt.

Dieser " Kreiszylinder " ist an der Stelle, an der das Kolbenband beginnt darin einzudringen leicht aufgebördelt,damit ein sicheres Eingleiten der noch geöffneten Einzelkolben gewährleistet ist.

Diesen zuvor beschrieben Zylinder, der sich entgegen sonst üblichen Zylindern dadurch auszeichnet, daß er viertelkreisrund angeordnet ist, ist der " Eingangszylinder."(9) Eingangszylinder desshalb, weil er für das Kolbenband,das in das system ( Behältnis ) (1o) eindringt , in Bewegungsrichtung gemäß Pfeil ( 5 ) den Eingang bedeutet.

Entsprechend ist der gerade angeordnete Zylinder,( E-F-G-H) der mit seiner inneren Dichtung ( 8 ) den geöffneten Bandkolben ebenfalls dicht umschließt der Ausgangszylinder,da die Einzelkolben über diesen Zylinder das System ( Behältnis) (1o) verlassen.

Im Sinne der voraufgeführten Hauptansprüchen und noch nachaufgeführten Unteransprüchen ist eine Flüssigkeit aus einem Behältnis, in dem absoluter Unterdruck herscht, überzuführen ( zu pumpen ) in ein System mit höherem Druck ( Luftdruck ) Dabei ist erfindungsgemäß Beweis zu führen, daß gegen den höheren statischen Druck (11) außerhalb des Unterdruckbehältnisses vergleichseise zu üblichen Pumpsystemen weniger Arbeit zu leisten ist.

Durch motorischen Antriebswelle ( 4 ) setzt sich der Bandkolben in Pfeilrichtung ( 5 ) in Bewegung.Die geradlienig geführten Einzelkolben schließen sich während des Endringens in den Eingangszylinder dicht aufeinander und bilden innerhalb dieses Zylinders eine geschlossene ,sich bewegende, homogene Scheibe, die verhindert das ein Medium aus dem Behältnis (1o ) austritt oder ein anderes eintritt.

Nach Verlassen des Eingangszylinders geht der Bandkolben in die waagerechte Bewegeung über und die Einzelkolben öffnen sich - die Zwischenräume füllen sich mit der zu transportierenden Flüssigkeit und - schieben diese in Rechtung Ausgangszylinder,(12) durchlaufen den Ausgangszylinder und geben die Flüssigkeit bei Verlassen des Ausgangszylinders ( 13 ) ab,die sich in der Auffangwanne ( 14 ) sammelt.Zylinder und Behältnis sind druckstabil und dicht gegen den höheren Außendruck miteinander verbunden.

Im Bereich des Schnittes ( C - D ) wirkt der höhere statische Außendruck auf die gesamte wirksame Fläche ($F_w2$) des Einzelkolbens und versucht diesen durch den Ausgangszylinder in das Unterdrucksystem in dem Behältnis zurückzuschieben.

Exakt das gleiche versucht aber auch der Außendruck im Bereich des Schittes ( A-B).Auch hier wirkt der statisch -höhere Außendruck auf die wirksame Fläche des geschlossenen Einzelkolbens ( $F_w 1$). Da $F_w1$ gleich ist $F_w2$ wirkt in beiden Fällen die gleiche Kraft und hebt sich somit auf.Der statische Druck, so hoch er auch immer sein mag, neutralisiert sich. Der dargelegte Pumpmechanismus braucht nicht gegen den höheren statischen Außendruck anzuarbeiten. Arbeits-und Leistungsaufwand sind zu erbringen für die -inner Reibung, die Trägheit usw , wie bei mechanischen -Systemen dieser Art üblich.

## Patentanspruch

Pumpmechanismus für Medien, vorzugsweise Flüssigkeiten

Durch die besondere Gestaltung der Einzelkolben,in Zusammenwirken mit einem gebogenen ,kreisförmigen Zylinder und einem geraden Zylinder , in Verbindung mit der Wirkweise des Bandkolbens ist dieser Pumpmechanismus dadurch gekennzeichnet,daß er Medien aus niedrigem Druckgefälle in ein höheres Drucksystem verbringen kann, ohne die sonst übliche Arbeit zur Überwindung des statischen Druckunterschiedes aufzubringen. Darüberhinaus zeichnet sich das dargestellte Pumpsystem dadurch aus, daß bei kontinuierlichem Pumpvorgang der Unterdruck in dem Behältnis ( 1o ) konstant bleibt und während des Pumpvorganges ( auch bei Stillstand ) durch die Neutralisierung des statischen Druckdiferenzes kein außerhalb des Behältnis befindliches Medium ( 11 ) in das Behältnis einzudringen vermag. Dies gilt für gleiche und verschiedene Medien als Fördergut und für alle pumpbaren Medien .

## Unteranspruch Nr. II

## Pumpmechanismus für Medien, vorzugsweise Flüssigkeiten

Die Erfindung bezieht sich auf einen Pumpmechanismus,der Medien ( vorzugsweise Flüssigkeiten ) , untereinander in verschiedenen Druckzuständen befindlich,verbringt.

Im wesentlichen liegt dem Unteranspruch Nr. II die Wirk-und Anwendungsweise des Unteranspruches Nr. I zugrunde. Während jedoch im Unteranspruch Nr. I definiert ist, daß es sich um einen Pumpvorgang handelt der einer Entleerung eines Systemes ( Behältnisses)gleichkommt,in dem vorwiegend zwei verschiedene Druckzustände vorherschen, ist in dem nachfolgend aufgeführten Unteranspruch II charakteristisch das Auffüllen eines Systemes ( Behältnisses) dargestellt, bei dem mehrere Druckzustände eine Rolle spielen können.

Aus Anspruchsgründen wird mit dem Unteranspruch II eine Variante des Unteranspruches Nr. I vorgelegt.

Vielfältige Pumpen und Pumpmechanismen sind bekannt,die zwei Medien ( gleicher oder ungleicher Natur ), hier vorzugsweise Flüssigkeiten,aus einem (geschlossenen)System ( Behältnis ) in ein anderes mit höherem Druckgefälle zu befördern in der Lage sind.Allen ist eigen, daß bei dem Pumpvorgang Arbeit erbracht werden muß, um den statischen Druckunterschied zweier verschieden hoch gespannten Drucksystemen zu überwinden.

Hier will die Erfindung Abhilfe schaffen.Die Erfindung,wie sie in den Ansprüchen gekennzeichnet ist. löst die gleiche Pumpaufgabe - ohne den sonst üblichen hohen Arbeitsaufwand für die Überwindung des differierenden statischen -Druckgefälles aufbringen zu müssen.

Im folgenden wird die Erfindung anhand einer, den Ausführungsweg darstellenden Zeichnung ( Zeichnung Nr. 8) erläutert.

Grundelement ist ein konisch geformter Körper, dessen Seitenflächen von oben nach unten symetrisc-schräg aufeinander zulaufen und dessen untere und obere Begrenzungsfläche Segmentbögen verschiedener Radien darstellen. (1) (1a) ( 1b) (1c)

An den oberen Seitenflächen dieses Formkörpers sind Gelenkscharniere ( 1 d) ( 1 e] in der Art angebracht,daß mehrere Körper dieser Art miteinander verbunden werden können.Mit Hilfe dieser Verbundgelenke können viele miteinander verbundene Formkörper ( zug )-kraftschlüssig waagerecht und in einem Kreisbogen bewegt werden.Bei waagerechter Führung klaffen die einzlnen Körper, die wir zum besseren Verständis Einzelkolben nennen ,auseinander, wohingegen sie -bei Bewegung in Kreisbogenform eng aneinanderliegen.Alle Flächen der Einzelkolben sind plan und eben ausgeführt,damit sie nach allen Seiten hin ohne jegliche Zwischenräume anliegen können.

Beim Herumführen mehrerer miteinander verbundenen Einzelkolben um einen Kreisbogen mit dem Radium ( $r_1$) bilden diese ein geschlossenes,homogenes und dichtes kreisrundes Scheibenelement mit dem äußeren Radius ( $r_2$).

Die dazu mitbeitragenden oberen und unteren Segmentbögen -sind hingegen bei waagerechter ebener Führung von Nachteil. Um hier Abhilfe zu schaffen,wird jeder Einzelkolben in senkrechte Scheiben aufgeteilt ( 2 ) ,die einzeln miteinander -absolut dicht und kraftschlüssig mittels Schwalbenschwanzverbindungselementen ( 2 a ) verbunden sind .Diese Verbindung -ist in der Art arretierbar,daß die einzlenen Scheiben des -Einzelkolbens sich bei waagerechter Bewegung oben und unten annäherungsweise gerade anordnen . (2b)

Die Höhe des Körpers ist dann sowohl in der Kreisbewegung,als auch in der waagerechten Bewegung annähernd gleich ,nämlich $r_2$ -$r_1$.Dies stellt sicher,daß die Ansichtsflächen des Einzelkolbens bei beiden Bewegungsarten praktisch gleich groß -ist.

Zum weiteren Verständnis sollten wir eine Aneinanderreihung von mehreren Einzelkolben als " Kolbenband" oder "Bandkolben " bezeichnen.

Ein endloses Kolbenband ( 3 ) ist Hauptfunktionselement des hier vorgestellten Pumpmechanismusses,der an einem Ende um eine Antriebswelle ( 4 ) mit dem Radium ($r_1$) herumgeführt -ist,die sich in Pfleirichtung (5) bewegt ( antreibt).Auf der gegenüberliegenden Seite führt das Kolbenband um eine (hier) feststehende Führungswelle(6)deren Kreisbogen sich nach innen zu verjüngt, damit die Einzelkolben sich dicht und ohne anzuecken auflegen und wieder abheben können.(7)Damit der Bandkolben sich gerade und funktionsgemäß ausrichtet wird er gespannt.

Die rechtssteige angeordnete Führungswelle istgleichzeitig Teil eines viertelkreisrunden Zylinders( A-B-C-D),dessen inneres durchgängiges Volumen exakt dem Volumen des an dieser -Stelle zu einer geschlossenen Kreisscheibe zusammengegangenen Bandkolbens entspricht und dessen Außenflächen unter zuhilfenahme einer plastischen , jedoch druckbeständigen Dichtfläche ( 8 ) abdichtend anliegt. Dieser " Kreiszylinder" ist an beiden Enden leicht aufgebördelt,damit die ein-und ausdringenden Einzelkolben leicht und geführt eingleiten und sich ausrichten können.

Diesen zuvor beschriebenen Zylinder, der sich entgegen sonst üblichen Zylindern dadurch auszeichnet, daß er rund ausgeführt ist, ist der aus dem Gefäß (9 ) ausführende "Ausgangszylinder". Das System ( Behältnis (9) steht unter höherem Druck als -das System ( Behältnis (10) .Zwischen den Behältnissen-(9 + 10) ist ein gerader Zylinder angeordnet,durch den der Bandkolben ebenso durchgeführt wird wie vor bei dem Kreiszylinder beschrieben, jedoch in gerader Ausrichtung und zwangsläufig auseinander-gegangenen Einzelkolben.Zum besseren Verständnis -nennen wir diesen Zylinder " Verbindungszylinder, da er die -Verbindung zwischen den unter verschiedenen Drücken stehenden Behältnissen (9 + 10) darstellt.

Im Sinne des voraufgeführten Anspruches ist Beweis zu führen, daß ein Medium aus dem Niedrigdrucksystem(1o) in das höhere Drucksystem(9) gepumpt werden kann und das dabei zur Überwindung der statischen Druckdifferenz weniger Arbeitsaufwand aufzubringen ist, als dies bei vergleichbaren anderen Pumpmechanismen der Fall ist.

Durch motorischen Antrieb über die Antriebswelle ( 4 ) setzt sich der Bandkolben ( 3 ) gemäß Pfeilrichtung ( 5) in Bewegung und erfährt dabei Führungsunterstützung durch Gleit und Richtungshilfen.( 11 ).

Nach Verlassen der Antriebswelle richten sich die Einzelkolben gerade aus und führen zunächst in den Eingangszylinder ( I-J-K-L ).Dieser Zylinder nennen wir Eingangszylinder,weil er in das , im Verhältnis zum herschenden Umgebungsdruck -( z.B. atmosphärischer Druck) mit einem davon differierendem Druckgefälle ausgerüsteten Druckbehältnis (10) führt. Dieser Eingangszylinder entspricht im wesentlichem und ist gleich gestaltet wie der bereits vorbeschriebene Verbindungszylinder.Sowohl bei Betrieb, als auch im Stillstand dichtet der Eingangszylinder mit dem darin befindlichen Kolbenband das Behältnis 1o gegen den Umge-bungszustand ab und verhindert ein-und ausdringen von Medien.Beim weiteren Betrieb des Mechanismusses schleppt der Bandkolben Umgebungsmedium ( Luft) (12) in das Behältnis (1o) ein,das hier ausperlt und über eine geeigente Entlüftung entsorgt werden kann.Im Austausch mit der Luft füllen sich dann die Zwischenräume zwischen den Einzelkolben mit dem zu fördernden Medium ( Flüssigkeit) ( 13) und schieben diese in den Verbindungszylinder und darüber hinaus in das Behältnis , oder Pumpkammer (9).Im weiteren Vortrieb des Bandkolbens beginnt dieser sich um die Führungswelle 6 wieder zu schließen und verläßt als geschlossenes,abdichtendes Scheibenelement das Behltnis (9).Dieser vorbeschriebene Pumpvorgang wiederholt sich ständig und sowohl während des Betriebes, als auch bei Stillstand heben sich alle Resultierenden der verschiedenen statischen Drcukdifferenzen gegenseitig auf.

Die den verschiedenen Drücken ausgesetzten wirksamen Kolbenflächen sind in allen Lagen gleich groß, so daß der darauf lastende Druck innerhalb der verschiedenen Systeme(Kammern oder Behältnissen ) überall die gleiche Kraft ausübt,die zugehörigen Kraftrichtunen jedoch immer entgegengesetzt sind.

Der dargelegte Pumpmechanismus braucht demgemäß nicht gegen verschiedene vorherschende statische Druckdifferenzen in der Form anzuarbeiten, wie dies bei Pumpsystemen anderer Art und Ausführung notwendig ist.

## Patentanspruch

Durch die besondere Gestaltung der Einzelkolben,des kreisförmigen Zylinders, des Kolbenbandes und dessen zwangsweisen Verhalten bei geradliniger und kreisförmiger Bewegung, liegt ein Pumpmechanismus vor, der dadurch gekennzeichnet ist,daß der sonst übliche Arbeitsaufwand zur Überwindung des statischen Druckes bei Pumpvorgängen zwischen Systemen von verschieden hohen Drücken nicht aufzubringen ist.

Darüberhinaus zeichnet sich dieser Pumpmechanismus dadurch aus, daß er bei Stillstand die statischen Drücke der verschiedenen Systeme im Gleichgewicht hält und somit absperrenden und verschließenden Charakter ( Ventil ) ausweist.

## Unteranspruch N r. III

Pumpmechanismus für Medien, vorzugsweise Flüssigleiten

Die Erfindung bezieht sich auf einen Pumpmechanismus,der Medien ( vorzugsweise Flüssigkeiten ) von einem ( niedrigen ) Druckniveau ( Behältnis ) in ein anderes ( hohes) Druckniveau ( Behältnis ) transportiert.

Im wesentlichen liegen der Erfindung die Grundzüge ,Wirkweise und Erkenntnisse,sowie die Darlegun-gen der Unteransprüche Nr. I und II dieses Gesamtpatentanspruches zugrunde, auf deren Einzelheiten und Details nicht mehr eingegangen werden braucht.

In den Unteransprüchen I und II ist dargelegt, daß bei einem Pumpvorgang,wie darin vorgetragen, der statisch höhere Druck eines Systemes mitbenutzt wird um den Pumpvorgang zu entlasten.

Gleichwohl ist zu erkennen, daß dabei die Geschwindigkeit des Kolbenbandes von der geraden Führung, zu der mittleren Geschwindigkeit bei der kreisbogenführung differiert,da die als zusammengeschlossen Scheibe im Kreiszylinder bewegten Einzelkolben nur am äußeren Rand die gleiche (Umdrehungs)-Geschwindigkeit aufweisen,wie der sich waagerecht bewegende Bandkolben.Zum Mittelpunkt hin nimmt die Geschwindigkeit -in der Kreisbewegung ständig ab, so daß die anzusetzende -"mittlere Geschwindigkeit" in der Kreisführung niedriger -ist, was dazu führt, daß die verschiedenen Volumina,die in der Kreisbewegung und in der Geradbewegung,je Zeiteinheit, transporiert werden, verschiedenartig sind.

Ebenso verhindern die in den Unteransprüchen Nr. I und II vorgetragenen , oben an den Einzelkolben angebrachten Gelenkscharniere, trotz Spannvorrichtung, nicht, daß sich die Einzelkolben beim auf-und ablegen von den Wellen und beim waagerechten Ausrichten und beim Ein-und Ausführung in den ( gerade angeordneten ) Zylinder verkanten können.

Hier will die Erfindung Abhilfe schaffen.Die Erfindung,wie sie in den Ansprüchen gekennzeichnet ist,löst diese Aufgabe dahingehend, daß die mittleren Wege - und somit die transportierten Volumina in der Kreisbewegung, als auch in der geradliniegen Bewegungen gleich groß sind.Bezugnehmend auf die mechanische Arbeitsgleichung :

$$W \quad = \quad P \quad x \quad s$$
$$( \ Arbeit) \quad = \quad (Kraft) \quad x \quad (Weg)$$

stellt sie sicher, daß der Weg ( s ) bei dem wesentlichen Arbeitsgängen ( Pumpvorgängen ) gleich ist - und damit der Arbeitsaufwand der sich im Kreiszylinder manifestiert im wesentlichen entspricht dem Arbeitsaufwand in dem gerade angeordneten Zylinder.

Da die ( resultierende ) Kraft , die auf die dieser Kraft -ausgesetzten (wirksamen) Kolbenflächen an allen Punkten -gleich ist,ergibt sich eine günstigere Leistungsdarstellung. Ebenso will die Erfindung der möglichen Verkantung der geradliniegen Kolbenführung dadurch Abhilfe schaffen, daß ein Verbindungsgestänge ( Achse) die einzelnen Einzelkolben -des Kolbenbandes in der Art verbindet, daß bei gerader Führung eine Arretierung in dem auseinanderklaffenden Zustand geschaffen wird, die jedoch bei kreisrunder Führung (um die ( Wellen ) sich -auf das System in nichtstörender oder behindernder Weise verhält.

Im folgenden wird die Erfindung anhand einer,den Ausführungsweg darstellenden Zeichnung ( Zeichnung Nr.9 ) erläutert.

Die Einzelkolben ( 1 )erhalten an dem oberen (breiteren)Ende keine starren Gelenkverbindungen,sondern Gelenkscharniere, (2) ,die an einem beweglichem (schwalbenschwanzförmigem)Formstück ( 3 ) befestigt sind,das sich in einer entsprechend dazu passenden Führung ( 4 ) von unten nach oben und von oben nach unten bewegen kann.Die Neigung dieses Führungsmechanismus ist durch die Achsen (a-b) gekennzeichnet und ist bei Bedarf stärker auszuführen,wenn auf eine Symetriche Anordnung der Führungen zueinander verzichtet wird.

Diese Neigung ermöglicht, wenn auf die einzelnen Einzelkolben Zugkräfte ausgeübt werden ( über die Gelenkverbindungen (2)), daß die Gelenkverbindungen bei gerader -Bewegungsrichtung sich am oberen Ende des Einzelkolbens anordnen und sich automatisch bei (gespannter) Bewegung um eine Welle ( 6 ) sich nach unten bewegen und sich soweit wie möglich unterhalb, in diesen Fall in der Mitte des Einzelkolbens anordnen.Die Neigung der Ebenen (a-b) in Verbindung mit der Formgebund des Einzelkolbens führen dazu, daß sich bei unterer Anordnung der Gelenkscharniere, die Einzelkolben sich fest zusammenschließen und ein in sich dichtes, zusammenhängendes Scheibenelement bilden, das solange in dieser Form verharrt( 7 ) , bis sich der Bandkolben aus der Kreisführung in geradliniege Führung begibt.Jedes Mal bei dieser Richtungsänderung gehen die -Einzelkolben auseinander ( 8 ) bezw. beginnen sich zu -schließen.

Da der sich bei jeder Richtungsänderung nach oben oder nach unten bewegende (schwalbenschwanzförmige) Führungsstift, in der zu ihm gehörenden Fürhung darin eingedrungenes Medium ( Flüssigkeit ) aus dieser Führungsöffnung ( 4) verdrängen muß sind Drainageöffnungen 9)anzulegen, die dies erleichtern.(auch seitlich erforderlich )

Entpsrechend sind an den Wellen im Verlauf der Drehbewegung des Bandkolbens (insbesondere im Rundzylinder) Drainageabführungen vorzusehen ( 1o ) damit ein Zurückfließen des in die Einzelkolben eingedrungenen Mediums ermgöglicht wird Auch bei den hier beschriebenen Einzelkolben ist eine Aufteilung des Einzelkobenformstückes in einzelne Scheiben (11) (12) ( 13 ) möglich,wobei sich die Berührungsflächen der einzelnen Scheiben in den Ebenen (a-b) befinden und von dem -Schwalbenschwanzführungsstift ( 3) zusammengehalten werden. Diese Aufteilung in Scheiben trägt Sorge, daß der Einzelkolben in der geradliniegen Führung annäherungsweise den gleichen Querschnitt annimmt (14), als

14

bei der kreisförmigen Fürnung.

Bei Betrachtung des in den Unteransprüchen Nr. I und Nr. II bereits vorgetragenem Pumpmechanismus,der eine Flüssigkeit aus einem Niedrigdrucksystem ( 15) in ein höheres Drucksystem ( 16 ) zu verbringen hat, unter Berücksichtigung der hier erläuterten Einzelheiten, ist festzustellen,daß der Bandkolben wie gehabt über die Antriebwelle in Bewegung gesetzt wird und bei geradlinigen Lauf sich die Verbindungsgelenke oben anordnen .

Bei jedem Übergang von Geradlauf in Kreislauf wandern die, dei Zugkraft übertragende Gelenke nach unten hin und die Zugkraft und die Geschwindigkeit wird dem nunmehr zum Scheibenelement zusammengefügtem Bandkolben an dieser Stelle vermittelt.

Dies führt dazu , daß die Geschwindigkeit des geradlinig -laufenden Kolbenbandes der mittleren Geschwindigkeit des Scheibenelementes bei Rundaluf ( gemessen in halber Einzelkolbenhöhe) entspricht.Unter Berücksichtigung dieser Vorgabe beträgt der in der beliebigen Zeiteinhe it zurückgelegt Weg ( $s_1$) des Bandkolbens bei geradem Lauf exakt dem Weg ( $s_2$) des zusammengeführten Bandkolbens in der Kreisbewegung,was bei der vorgegeben Figuration des Mechanismus bedeutet, daß bei geradliniger Bewegung ( z.B. im Bereich des gerade angeordneten Zylinders ( A-B-C-D) das gleiche Volumen bewegt wird ( bestehend aus Einzelkolben und Fördergut, wie innerhalb des Kreiszylinders ( E-F-G-H ) hier jedoch nur bestehend aus zusammengeschlossenen Einzelkolben.

Die , die Antriebswelle entlastende Arbeit,die geleistet -wird,dadurch daß der sich zusammenschließende Bandkolben von dem Überdrucksystem in den Kreiszylinder ( E F-G-H ) der in das Untersucksystem ( 15) einmündet,hineingepreßt-wird,entspricht der Arbeit, die die Antreibswelle aufbringen muß, um den mit Fördergut ( Flüssigkeit)aufgeladenen,offenen Bandkolben aus dem geraden Zylinder (A-B-C-D),der das Unterdrucksystem (15) wiederum mit dem Überdrucksystem (16) verbindet,herauszuführen.

Weiterhin wird zum einwandfreiem Arbeitsablauf des Pumpmechanismus eine mittig angeordnete Verbindung zwischen die Einzelkolben angeordnet. Diese auf Zugkraft ausgelegte Verbindung (17) endet beidseitig in einer beweglichen Achse ( 18 ),die einseitig drehbar eingelagert ist (19) und auf der anderen Seite beweglich in einem Langloch eingelagert ist.

Bei geradlini gem Lauf der Einzelkolben verhindert diese dann starre Verbindung ein maximales Auseinandergehen der Einzelkolben und arretiert diese in der gewünschten Stellung. Ein Verkanten oder Verziehen des Bandkolbens wird verhindert.

Beim zusammengeschlossenen Bandkolben schiebt sich die -Verbindung innerhalb des langloches ( 2o) nach oben und tut dies automatisch ohne den Arbeitsablauf des Pumpmechanismus zu stören.

## Patentanspruch

Durch die besondere Gestaltung der Verbindungsgelenke der Einzelkolben , die sich bei kreisförmiger Bewegung selbständig in der Einzelkolbenmitte anordnen und sich ebenso selbstständig bei geraderlinieger Bewegung am oberen Einzelkolbenrand anordnen wir eine zwischen Geradlauf und Kreislauf differierende Geschwindigkeit erreicht, die sich dadurch auszeichnet, daß in beiden Bewegungszuständen der Bandkolben den gleichen mittleren Weg zurücklegt und die durch die Zylinder bewegten Volumina gleich sind.

Das mittig zwischen je zwei Einzelkolben angeordnete Verbindungselement (17) in Verbindung mit der dazugehörenden Lagerung zeichnet sich dadurch aus, daß die Einzelkolben ber geradliniegem Lauf gehalten, geführt und arretiert sind und bei kreigförmiger Bewegung den Gesamtmechanismus nicht belastet.

ZEICHNUNG
NR. 4

0 282 620

UNTERDRUCK

ÜBERDRUCK

UNTERDRUCK

ÜBERDRUCK

ÜBERDRUCK

UNTERDRUCK

ÜBERDRUCK

UNTERDRUCK

SCHNITT C-D

SCHNITT A-B

SCHNITT A-B'

SCHNITT E-F

= FLÜSSIGKEIT

ZEICHNUNG NR. 2

0 282 620

ZEICHNUNG NR. 5

ATMOSPH DRUCK

28

26

28

17

18

UNTERDRUCK

18

17

29

30

3

1

3

15

15

27

31

FLUSSIGKEIT

32

h ≈ 10,3 m

33

0 282 620

ZEICHNUNG NR. 4

ZEICHNUNG NR. 5

ZEICHNUNG NR. 6

HOCHDRUCK

NIEDERDRUCK

18

HOCHDRUCK

NIEDERDRUCK

= FLÜSSIGKEIT

ZEICHNUNG NR. 7

UNTERDRUCK

= FLÜSSIGKEIT
(WASSER)

DRUCKWIRKUNG

SCHNITT A·B

SCHNITT C·D

SCHNITTE·F

SCHNITT G·H

SCHNITT J·K

0 282 620

**ZEICHNUNG NR. 8**

SCHNITT S-T

SCHNITT Q-R

SCHNITT U-V

SCHNITT W-X

SCHNITT Z-Y

DRUCK (UNTERDRUCK)

ÜBERDRUCK

FLÜSSIGKEIT (WASSER)

DICHTUNG

ZEICHNUNG NR. 9

FLÜSSIGKEIT

NIEDERDRUCK

HOCHDRUCK

FUNKTIONSZEICHNUNG 1/2 VERKLEINERTER MASSTAB

SCHNITT L-M

SCHNITT J-K

SCHNITT A-B

SCHNITT C-D

SCHNITT H-I

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 642 249 (ENDLICH) <br> * Anspruch 1 * <br> ----- | 1 | F 03 B 17/00 |
| | | | **RECHERCHIERTE SACHGEBIETE (Int. Cl.4)** |
| | | | F 03 B |

Der vorliegende Recherchenbericht wurde für alle Patentansprüche erstellt

| Recherchenort | Abschlußdatum der Recherche | Prüfer |
|---|---|---|
| DEN HAAG | 24-11-1987 | DE WINTER P.E.F. |